# EUROPEAN PATENT SPECIFICATION

(11) **EP 2 028 135 B1**
(45) Date of publication and mention of the grant of the patent: **22.09.2010**
(21) Application number: 08166879.0
(22) Date of filing: 09.03.2005
(51) Int. Cl.: B65D 88/62, B65D 90/04, B60P 1/60, B65G 53/50, B65G 69/08

(54) **Tiltless bulk material cargo container liner**
Auskleidung für Schüttgutfrachtbehälter ohne Kippfunktion
Poche intérieure pour benne non-basculante de transport en vrac

(30) Priority: 16.03.2004 US 800765
(43) Date of publication of application: 25.02.2009
(62) Divisional of application: 05708981.5
(73) Proprietor: Illinois Tool Works Inc., Glenview, IL 60026 (US)
(72) Inventor: McMahon, Michael J., Illinois, IL 60067 (US); Piotrowski, Stanley, Illinois, IL 60101 (US); Miller, Douglas, Texas, TX 77339 (US); Mino, Oswaldo, Texas, TX 77064 (US); Stopper, Shelley, Texas, TX 77057 (US)
(74) Representative: Finnie, Peter John

(56) References cited:
- EP-A- 1 101 712
- EP-A- 1 386 859
- WO-A-88/09755
- GB-A- 2 372 984
- JP-A- 2001 080 695
- US-A- 5 494 394
- US-A1- 5 553 980

## Description

### FIELD OF THE INVENTION

The present invention relates generally to bulk material cargo containers within which fluid-like or flowable cargo materials, such as, for example, dry bulk chemicals, resins in powdered, flaked, and pelletized forms, coffee beans, flour, grains, rice, sugar or the like, are normally housed or contained while being shipped or transported, and more particularly to a new and improved bulk material cargo container liner system, for use in conjunction with such bulk material cargo containers, wherein the new and improved bulk material cargo container liner system not only enables or permits the bulk material cargo container to be utilized as a bulk material storage bin or silo, but in addition, facilitates the discharge of the bulk material cargo load from the bulk material cargo container in accordance with operational techniques which do not require the bulk material cargo container to be moved into a tilted mode, as is normally performed or conducted in accordance with conventional or **PRIOR ART** bulk material cargo load discharge techniques in order to effectively discharge the entire bulk material cargo load from the bulk material cargo container, but to the contrary, achieves such discharge of the bulk material cargo load from the bulk material cargo container as a result of effectively altering the angle of repose of the bulk material disposed within the bulk material cargo container.

### BACKGROUND OF THE INVENTION

Bulk material cargo containers are conventionally used, at different times, to house or contain different fluid-like or flowable bulk cargo materials, such as, for example, dry bulk chemicals, resins in powdered, flaked, and pelletized forms, flour, coffee beans, grains, rice, sugar, and the like, while the bulk cargo materials are being shipped or transported from one location to another by means of, for example, ship, truck, railroad, and the like. Since different bulk cargo materials are shipped or transported within particular bulk material cargo containers at different times, it is imperative that the bulk material cargo containers effectively be clean so as not to contaminate the bulk cargo materials comprising a particular bulk material cargo load with residual bulk cargo materials which may remain within the bulk material cargo container from a previously shipped or transported bulk material cargo load. Accordingly, in order to eliminate the normally necessary cleaning of each bulk material cargo container hold after a particular bulk material cargo load has been unloaded or discharged from a particular one of the bulk material cargo container holds, it has become conventional within the industry to employ removable bulk material cargo container liners within the cargo holds of the bulk material cargo containers wherein, after a particular bulk material cargo load has been delivered to its destination and discharged or unloaded, the bulk material cargo container liner is simply removed from the bulk material cargo container whereby the bulk material cargo container is again useable, without a significant amount of cleaning being required, for carrying another bulk material cargo load typically comprising fluid or flowable bulk cargo material. Bulk material cargo containers, having bulk material cargo container liners disposed therein for shipping or transporting fluid or flowable bulk cargo materials, may be found, for example, within United States Patent 5,657,896 which issued on August 19, 1997 to Matias**,** United States Patent 5,542,563 which issued on August 6, 1996 to Matias**,** United States Patent 5,489,037 which issued on February 6, 1996 to Stopper**,** United States Patent 5,421,476 which issued on June 6, 1995 to Matias**,** United States Patent 5,222,621 which issued on June 29, 1993 to Matias**,** United States Patent 5,193,710 which issued on March 16, 1993 to Podd, Sr. et al.**,** United States Patent 5,152,735 which issued on October 6, 1992 to Podd, Jr. et al.**,** United States Patent 5,137,170 which issued on August 11, 1992 to Matias**,** United States Patent 4,884,722 which issued on December 5, 1989 to Podd**,** and United States Patent 4,541,765 which issued on September 17, 1985 to Moore**.**

In connection with the aforenoted use of bulk material cargo container liners within bulk material cargo containers, it is noted that conventionally, bulk material cargo container liners are provided with an upper intake port through which the bulk cargo material is conducted into the bulk material cargo container liner, and a lower discharge port through which the bulk cargo material is discharged or exhausted outwardly from the bulk material cargo container liner. When the bulk cargo material is in fact to be discharged from the bulk material cargo container liner, the discharge port is opened, and gravitational forces will initially cause the bulk cargo material to naturally and automatically flow outwardly through the discharge port of the bulk material cargo container liner. This procedure will continue until the bulk cargo material reaches or attains its natural angle of repose, as determined along the slide surface of the bulk cargo material, at which point in time the various forces acting upon the bulk cargo material will effectively be equal and opposite to each other so as to attain or define a state of equilibrium whereby the bulk cargo material will be disposed in a static state and will no longer be able to flow. More particularly, for example, the vector of gravity which is operating or oriented along the slide surface of the bulk cargo material, so as to accordingly act upon the bulk cargo material in order to normally cause the bulk cargo material to naturally or automatically flow, will effectively be counteracted by means of other force vectors inherent to or characteristic of the bulk cargo material, such as, for example, conglomeration forces, nesting forces, frictional forces, shear forces, and the like.

The nesting or shear forces are or may be determined, for example, by means of the size, shape, and density characteristics of the bulk cargo material, whereas the conglomeration forces are or may be determined, for example, by means of moisture, additives, and other characteristics of the bulk cargo material. It can therefore be further appreciated that when the angle of the slide surface of the bulk cargo material, along which the bulk cargo material will normally flow, is equal to or less than the aforenoted angle of equilibrium, or in other words, the angle of repose of the bulk cargo material, the bulk cargo material will remain static and will not flow due to the fact that the force vector of gravity operating or oriented along the slide surface of the bulk cargo material is in fact sufficiently counteracted by means of the other aforenoted force vectors similarly operating or oriented along the slide surface of the bulk cargo material. Conversely, when the angle of the slide surface of the bulk cargo material, along which the bulk cargo material will normally flow, is greater than the aforenoted angle of equilibrium or the angle of repose of the bulk cargo material, the bulk cargo material will become dynamic and will in fact flow due to the fact that the force vector of gravity operating or oriented along the slide surface of the bulk cargo material is now in fact greater than, overcomes, or exceeds the other aforenoted force vectors similarly operating or oriented along the slide surface of the bulk cargo material.

Conventionally, the most common manner by means of which the aforenoted flowability characteristics of the bulk cargo material can be affected, altered, or adjusted, is to cause the bulk cargo container to undergo a tilting operation by means of which, for example, the front end of the bulk material cargo container is lifted to an elevational level which is higher than the back or rear end of the bulk material cargo container. More particularly, when a particular bulk material cargo container, carrying a particular bulk cargo material, undergoes a predetermined amount or degree of tilt, the particular bulk cargo material will once again begin to flow under the influence of gravity, and may accordingly be conducted toward the discharge port of the bulk material cargo container, because the angle of the slide surface of the bulk cargo material, or in other words, the angle of incline or decline, is now greater than or exceeds the angle of repose of the bulk cargo material such that the vector of gravity, operating or oriented along the slide surface of the bulk cargo material has effectively been increased so as to be greater than, exceed, or overcome the aforenoted nesting, frictional, shear, and conglomeration force vectors. It has been experienced, however, that the implementation of such bulk material cargo container tilting operations is not always easily or readily able to be accomplished, particularly in a cost-effective manner.

Normally, for example, in order to comprise economically viable bulk material cargo transportation, delivery, and distribution systems, the systems comprise an operative integration of bulk material cargo container transportation facilities, such as, for example, rail hopper cars or a fleet of bulk material cargo container tractor-trailer trucks, sea-going bulk material cargo container ships, and the like. In addition, bulk material cargo container tilt apparatus or mechanisms are conveniently or viably positioned at predetermined locations adjacent to or near the bulk material cargo container transportation facilities for operatively handling the aforenoted rail-hopper cars, tractor-trailer trucks, and ship containers in order to discharge or unload the bulk material cargo loads carried thereby. Still further, silo or other similar bulk material storage facilities are also conveniently or viably positioned at predetermined locations with respect to the aforenoted transportation and handling facilities so as to be capable of storing the unloaded bulk material cargo loads in preparation for, or in conjunction with, the distribution of such bulk material to end user customers. Unfortunately, as may be readily appreciated, the construction and operation of such an integrated transportation, handling, and distribution system is relatively expensive. Accordingly, it is only economically viable for such integrated transportation, delivery, and distribution systems to be constructed and operated by relatively large-sized companies located primarily within highly-industrialized nations. Therefore, it is appreciated still further that relatively medium-sized and small-sized companies are not able to viably compete economically with such relatively large-sized companies in view of the fact that such medium-sized and small-sized do not have access to, or the economic resources to construct and operate, the aforenoted integrated bulk material cargo container transportation and handling facilities, or the bulk material storage and distribution facilities.

At best, if such relatively medium-sized and small-sized companies nevertheless desire to engage in bulk material cargo load transportation, handling, and distribution businesses, and try to be competitive with the relatively large-sized companies, they are often forced to lease necessary services or facilities from the relatively large-sized companies which, again, is not economically advantageous. However, if a bulk material cargo container system could be developed wherein tilt-type handling apparatus or systems were no longer necessary for discharging or unloading the bulk material cargo load from the bulk material cargo containers, or in addition, if apparatus or systems could likewise be developed wherein auxiliary silo-type storage facilities were likewise no longer necessary for storing and distributing bulk material cargo loads from bulk material cargo containers, then the relatively medium-sized and small-sized companies could enjoy the economic advantages to be derived from bulk material cargo load transportation, handling, and distribution systems. The relatively medium-sized and small-sized companies could therefore in fact viably compete economically with the relatively large-sized companies.

WO 88/09755 describes a bulk material handling unit comprising a flexible enclosure formed of flexible sheet material. Located in the enclosure is a vacuum tube assembly consisting of a vacuum tube with a plurality of openings. Also provided on either side of the vacuum tube are tubes of smaller diameter to which air is delivered under pressure for aerating the bulk material.

A need therefore exists in the art for a new improved bulk material cargo container liner system, for use within bulk material cargo containers, wherein tilt-type handling apparatus would no longer be necessary for unloading or discharging bulk material cargo loads from bulk material cargo containers, and in addition, a new and improved bulk material cargo container liner system, for use within bulk material cargo containers, wherein auxiliary silo-type storage facilities would likewise no longer be necessary for storing and distributing bulk material cargo loads from bulk material cargo containers, whereby relatively medium-sized and small-sized companies can enjoy the economic advantages to be derived from bulk material cargo load transportation, handling, and distribution systems such that the relatively medium-sized and small-sized companies can in fact viably compete economically with the relatively large-sized companies.

### SUMMARY OF INVENTION

The aforenoted need is resolved in accordance with the teachings and principles of the present invention as a result of the provision of a new and improved bulk material cargo container liner system, in accordance with claim 1, for use within bulk material cargo containers.

### BRIEF DESCRIPTION OF THE DRAWINGS

Various other features and attendant advantages of the present invention will be more fully appreciated from the following detailed description when considered in connection with the accompanying drawings in which like reference characters designate like or corresponding component parts throughout the several views, and wherein:

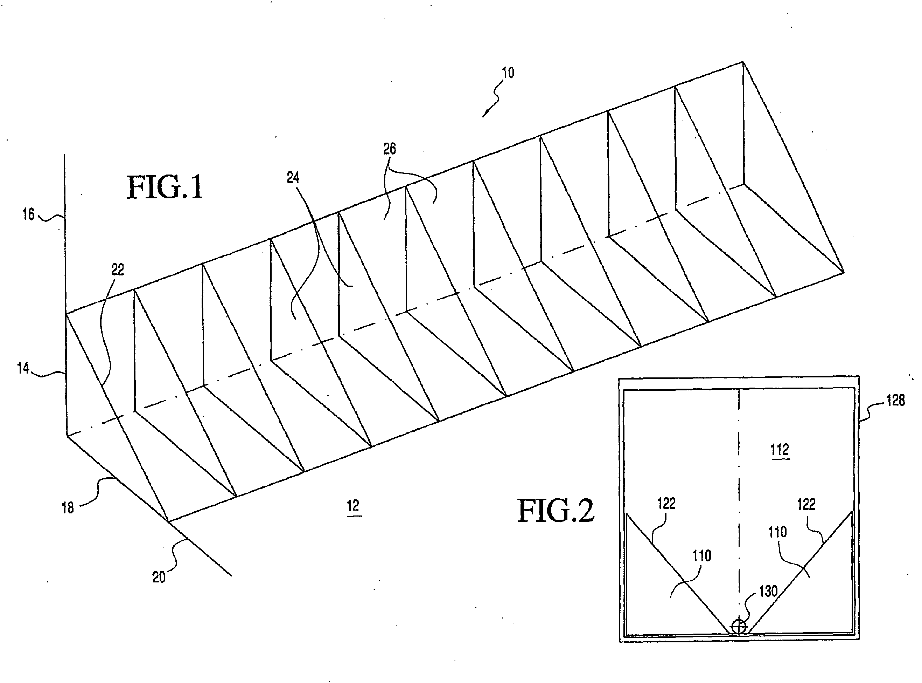

**FIGURE 1** is a schematic perspective view of a new and improved inflatable air bag component which has been constructed in accordance with the principles and teachings of the present invention and has a substantially right-triangular cross-sectional configuration, and which is adapted to be utilized in conjunction with a new and improved bulk material cargo container liner of the present invention so as to facilitate the discharge or unloading of bulk cargo materials from the bulk material cargo container liner and the bulk material cargo container without necessitating any operative tilting of the bulk material cargo container;

**FIGURE 2** is a schematic cross-sectional view of a bulk material cargo container liner, disposed within a bulk material cargo container, wherein the bulk material cargo container liner has a pair of inflatable air bag components disposed internally within the oppositely disposed, laterally spaced corner regions of the bulk material cargo container liner such that when the inflatable air bag components are inflated, as illustrated, the bulk cargo material, disposed within the bulk material cargo container liner, will be moved toward the longitudinal centerline region of the bulk material cargo container liner so as to be discharged through means of a single vacuum discharge tube assembly located along the longitudinal centerline region of the bulk material cargo container liner;

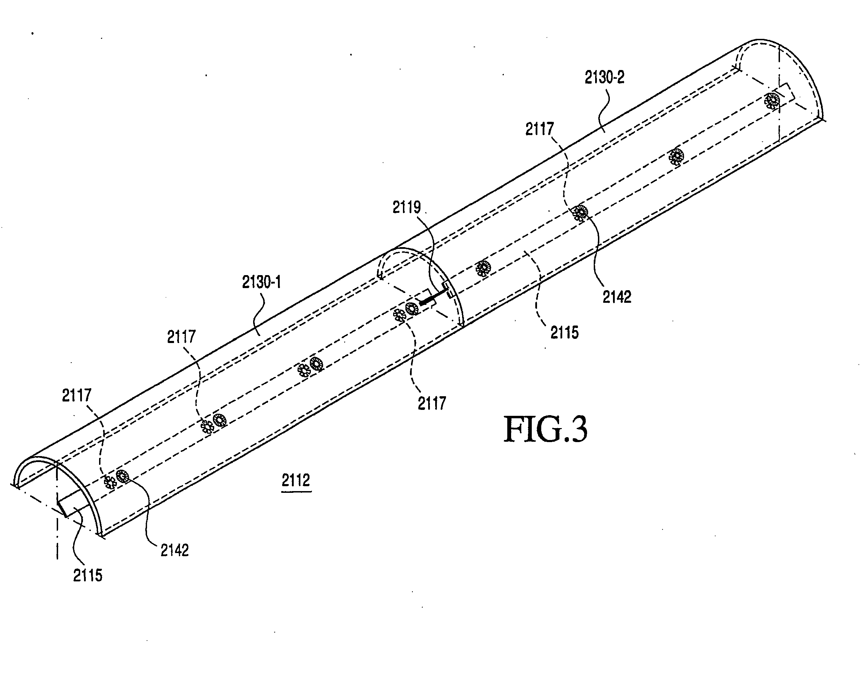

**FIGURE 3** is a perspective view of two of the vacuum discharge tube assembly sections wherein a first embodiment of an adjustable means is incorporated within the vacuum discharge tube assembly sections for altering the effective size of the aperture openings defined within the vacuum discharge tube assembly sections whereby depending upon the relative disposition of the adjustable means, different vacuum suction levels can be achieved so as to facilitate the discharge of the bulk cargo material from the interior portion of the bulk material cargo container liner;

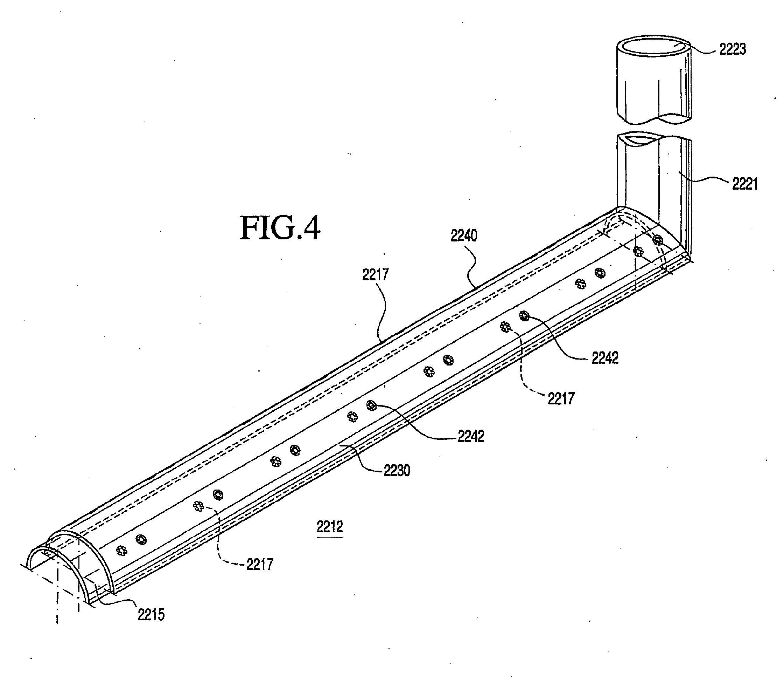

**FIGURE 4** is a perspective view of one of the vacuum discharge tube assembly sections wherein a second embodiment of an adjustable means is incorporated within the vacuum discharge tube assembly sections for, again, altering the effective size of the aperture openings defined within the vacuum discharge tube assembly sections whereby depending upon the relative disposition of the adjustable means, different vacuum suction levels can be achieved so as to facilitate the discharge of the bulk cargo material from the interior portion of the bulk material cargo container liner; and

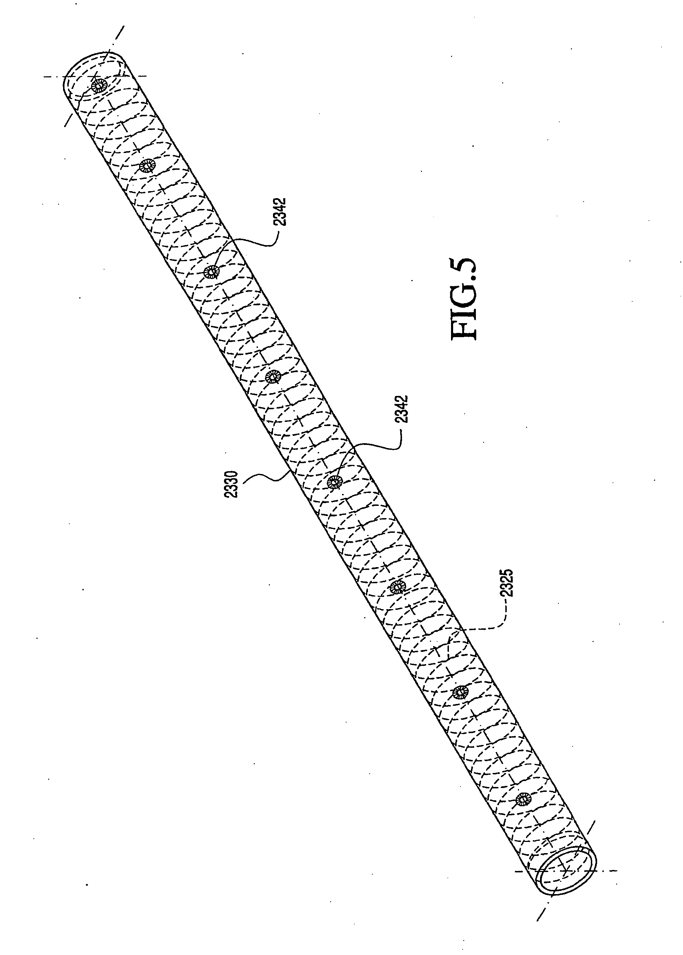

**FIGURE 5** is a perspective view of a first alternative embodiment of a vacuum discharge tube assembly, which may be utilized within any one of the bulk material cargo container liners as desired, wherein the vacuum discharge tube assembly has a substantially circular cross-sectional configuration and is provided internally with a coil spring member in order to effectively prevent the internal collapse of the vacuum discharge tube assembly as well as to facilitate the preservation of the tubular configuration of the vacuum discharge tube assembly despite bending or coiling of the same during, for example, the storage or transportation of the vacuum discharge tube assembly prior to the installation of the same within the bulk material cargo container liner.

### DETAILED DESCRIPTION OF THE PREFERRED EMBODIMENT

As has been noted hereinbefore, in order to discharge or unload a bulk material cargo load or contents from a bulk material cargo container liner, the bulk material cargo container, within which the bulk material cargo container liner is disposed, normally needs to be tilted, however, in accordance with the teachings and principles of the present invention, the need for tilting the bulk material cargo container, in order to discharge or unload the bulk material cargo load or contents therefrom, is obviated or rendered unnecessary. More particularly, if tilting of the bulk material cargo container is to be obviated, means must nevertheless be provided in order to cause the bulk material cargo load or contents to experience its requisite movement or flowability toward the discharge or unloading port so as to in fact be able to be discharged or unloaded from the bulk material cargo container liner. In accordance then with the particular principles and teachings of the present invention, the bulk material cargo container liner has integrally incorporated therein at least one vacuum discharge tube assembly and a plurality of inflatable air bag components wherein the inflatable air bag components are adapted to be inflated by means of, for example, suitable valve structures, not shown, which are adapted to be fluidically connected to suitable inflation and deflation control means, also not shown, so as to operatively control the movement of the bulk cargo material toward the vacuum discharge tube assemblies.

Referring then to the drawings, and more particularly to FIGURE 1 thereof, a new and improved inflatable air bag component, which has been constructed in accordance with the principles and teachings of the present invention, and which is adapted to be utilized within a corner region of a new and improved bulk material cargo container liner assembly which has also been constructed in accordance with the principles and teachings of the present invention, so as to facilitate the discharge or unloading of bulk cargo materials from the bulk material cargo container liner and the bulk material cargo container without necessitating any operative tilting of the bulk material cargo container, is disclosed and is generally indicated by the reference character 10. More particularly, it is seen that the new and improved inflatable air bag component 10 has a substantially right-triangular configuration. In accordance with the intended use of this particular embodiment of the inflatable air bag component 10, the inflatable air bag component 10 is adapted to be disposed internally within the bulk material cargo container liner 12 which has the configuration of a rectangular parallelepiped, as is conventionally known, such that the vertically oriented leg portion 14 of the inflatable air bag component 10 is adapted to be disposed along one vertical side wall 16 of the bulk material cargo container liner 12, while the horizontally oriented leg portion 18 of the inflatable air bag component 10 is adapted to be disposed along the bottom wall or floor portion 20 of the bulk material cargo container liner 12.

In this manner, it can be readily appreciated, in turn, that the hypotenuse portion 22 of the inflatable air bag component 10 will be disposed at a predetermined inclined angle within the interior portion of the bulk material cargo container liner 12. It is to be additionally appreciated that the inflatable air bag component 10 is adapted to extend throughout the entire longitudinal extent of the bulk material cargo container liner 12. Accordingly, when the inflatable air bag component 10 is disposed in its inflated state, the inclined hypotenuse portion 22 of the inflatable air bag component 10 will serve to effectively move the bulk cargo material, disposed within the bulk material cargo container liner 12, from the side wall and corner regions of the bulk material cargo container liner 12 toward an axially central region of the bulk material cargo container liner 12. Conversely, when the inflatable air bag component 10 is disposed in its deflated state, that is, prior to inflation for its intended use, the hypotenuse portion 22 of the inflatable air bag component 10 will effectively collapse into the internal corner region of the bulk material cargo container liner 12 as defined at the intersection of the vertical side wall portion 16 of the bulk material cargo container liner 12 and the horizontal bottom wall or floor portion 20 of the bulk material cargo container liner 12. As can be readily appreciated from well-known principles and teachings of plane geometry, the linear extent of the hypotenuse portion 22 of the inflatable air bag component 10 is less than the combined linear extents of the vertically oriented leg portion 14 of the inflatable air bag component 10 and the horizontally oriented leg portion 18 of the inflatable air bag component 10.

Therefore, it is to be noted that in order to permit or facilitate the aforenoted internal collapse of the inflatable air bag component 10 whereby the same can in fact be disposed within the corner region of the bulk material cargo container liner 12 when the inflatable air bag component 10 is to be disposed in its fully deflated state, those regions of the vertically oriented leg portion 14 of the inflatable air bag component 10 and the horizontally oriented leg portion 18 of the inflatable air bag component 10 which are located remote from the corner region of the inflatable air bag component 10 are not actually fixedly secured to the vertical side wall 16 of the bulk material cargo container liner 12 or to the bottom wall or floor portion 20 of the bulk material cargo container liner 12. It is noted further that the inflatable air bag component 10 has a plurality of axially spaced, substantially right-triangularly configured gussets 24 disposed internally within the inflatable air bag component 10 so as to not only provide internal support within the inflatable air bag component 10 throughout the entire axial extent of the same, but in addition, the plurality of gussets 24 effectively divide the entire internal region of the inflatable air bag component 10 into a plurality of axially separated cells 26. The cells 26 may comprise fluidically separated compartments so as to be inflated separately by suitable means, not shown, or alternatively, the cells 26 may be fluidically connected to each other so as to be able to be inflated simultaneously by suitable means, also not shown. The foregoing use of one or more of the inflatable air bag components within bulk material cargo container liners can be better appreciated with reference being further made to **FIGURE 2****.** More particularly, as illustrated within **FIGURE 2****,** a bulk material cargo container liner 112 is disposed internally within a bulk material cargo container 128, and it is seen that the bulk material cargo container liner 112 has a pair of inflatable air bag components 110, each one of which is substantially similar to the inflatable air bag component 10 as disclosed within **FIGURE 1****,** disposed internally within the oppositely disposed, laterally spaced corner regions of the bulk material cargo container liner 112. In this manner, when both of the inflatable air bag components 110 are inflated, as is illustrated, the bulk cargo material, disposed within the bulk material cargo container liner 112, will be moved toward the longitudinal centerline region of the bulk material cargo container liner 112 so as to be discharged through means of a single, axially oriented vacuum discharge tube assembly 130 which is located along the longitudinal centerline region of the bulk material cargo container liner 112 and which is fluidically connected to a suitable source of vacuum, not shown.

Continuing further, as has been noted hereinbefore, and as is well-known in the art and industry, the bulk cargo material disposed internally within the bulk material cargo container liners is adapted to be discharged and exhausted by means of a source of vacuum, not shown, which is operatively and fluidically connected to the rear end portions of the vacuum discharge tube assemblies which are adapted to project outwardly through the rear end wall member of the bulk material cargo container liner. As may therefore be further appreciated, due to well-known pressure differential or pressure drop phenomena or principles, a higher vacuum or suction force level may therefore effectively be impressed upon that portion of the bulk cargo material which is disposed within the vicinity of the rear end wall member of the bulk material cargo container liner as opposed to that portion of the bulk cargo material which is disposed within the vicinity of the front end wall member of the bulk material cargo container liner. Accordingly, if it is determined that only a relatively low, or an insufficient, amount of vacuum or suction force level can be impressed upon that portion of the bulk cargo material which is disposed within the vicinity of the front end wall member of the bulk material cargo container liner whereby that portion of the bulk cargo material which is disposed within the vicinity of the front end wall member of the bulk material cargo container liner cannot necessarily be sufficiently or completely discharged and exhausted, it may be desired to structurally incorporate means within the vacuum discharge tube assemblies which can effectively alter the vacuum or suction force levels that can be generated throughout the longitudinal extent of the overall vacuum discharge tube assemblies between the rear and front wall members of the bulk material cargo container liner whereby, for example, greater vacuum or suction force levels can in fact be generated within the vicinity of the front end wall member of the bulk material cargo container liner.

More particularly, as disclosed within **FIGURE 3****,** the vacuum discharge tube assembly comprises a plurality of longitudinally aligned sections 2130-1,2130-2, and it is seen that a first means, for altering the effective vacuum or suction force levels that can be impressed upon the bulk cargo material throughout the longitudinal extent of the bulk material cargo container liner, resides in the provision of a pair of apertured strips or plates 2115, only one of which is actually illustrated, within each one of the vacuum discharge tube assembly sections 2130-1,2130-2 such that the apertured strips or plates 2115 are respectively movably mounted upon the interior portion of each one of the vacuum discharge tube assembly sections 2130-1,2130-2 between **EXTENDED** and **RETRACTED** positions. Each one of the strips or plates 2115 is provided with a plurality of longitudinally or axially spaced apertures 2117, and accordingly, depending upon the relative disposition of the strips or plates 2115 with respect to the vacuum discharge tube assembly sections 2130-1,2130-2, the apertures 2117 defined within the strips or plates 2115 can either be aligned with respect to, for example, the apertures 2142 defined within the peripheral side portions of a particular one of the vacuum discharge tube assembly sections, as disclosed, for example, in connection with vacuum discharge tube assembly section 2130-2, or alternatively, the apertures 2117 defined within the strips or plates 2115 can be misaligned with respect to, for example, the apertures 2142 defined within the peripheral side portions of a particular one of the vacuum discharge tube assembly sections, as disclosed, for example, in connection with vacuum discharge tube assembly section 2130-1.

It may therefore be appreciated that when the apertures 2117 defined within a particular one of the strips or plates 2115 are misaligned with respect to the apertures 2142 defined within a particular one of the vacuum discharge tube assembly sections, such as, for example, in connection with the strip or plate 2115 and the vacuum discharge tube assembly section 2130-1, air flow from the interior portion of the bulk material cargo container liner 2112 and through the apertures 2142 defined within the vacuum discharge tube assembly section 2130-1 is effectively blocked. Conversely, when the apertures 2117 defined within a particular one of the strips or plates 2115 are aligned with respect to the apertures 2142 defined within a particular one of the vacuum discharge tube assembly sections, such as, for example, the vacuum discharge tube assembly section 2130-2, air flow from the interior portion of the bulk material cargo container liner 2112 and through the apertures 2142 defined within the vacuum discharge tube assembly section 2130-2 is effectively permitted.

Accordingly, different levels of vacuum or suction force are able to be generated and impressed upon different regions of the bulk cargo material disposed within the bulk material cargo container liner 2112 so as to facilitate and ensure the discharge and exhaust of the bulk cargo material from all longitudinal or axial regions of the bulk material cargo container liner 2112. It is lastly noted in connection with this adjustment system that the strips or plates 2115, 2115 disposed within adjacent ones of the vacuum discharge tube assembly sections 2130-1,2130-2 may be interconnected together by suitable means, such as, for example, a slot and strap assembly 2119. In this manner, the strips or plates 2115, 2115 may be moved to, or disposed at, various longitudinal or axial positions as desired or required.

With reference now being made to **FIGURE 4****,** it is seen that a second means, for altering the effective vacuum or suction force levels that can be impressed upon the bulk cargo material throughout the longitudinal extent of the bulk material cargo container liner, resides in the provision of an apertured sleeve member 2215 within each one of the vacuum discharge tube assembly sections 2230 such that the apertured sleeve member 2215 is respectively movably mounted within the interior portion of each one of the vacuum discharge tube assembly sections 2230 between **EXTENDED** and **RETRACTED** positions. The sleeve members 2215 are similar to the aforenoted strips or plates 2115 in that each one of the sleeves 2215 is provided with two sets of longitudinally or axially spaced apertures 2217, only one set being visible, and accordingly, depending upon the relative disposition of the sleeves 2215 with respect to the vacuum discharge tube assembly sections 2230, the apertures 2217 defined within the sleeves 2215 can either be aligned with respect to, for example, the apertures 2240,2242 defined within the peripheral side portions of a particular one of the vacuum discharge tube assembly sections 2230, or alternatively, the apertures 2117 defined within the sleeves 2215 can be misaligned with respect to, for example, the apertures 2240,2242 defined within the peripheral side portions of a particular one of the vacuum discharge tube assembly sections 2230. It may therefore be appreciated that when the apertures 2217 defined within a particular one of the sleeves 2215 are misaligned with respect to the apertures 2240, 2242 defined within a particular one of the vacuum discharge tube assembly sections 2230, air flow from the interior portion of the bulk material cargo container liner 2212 and through the apertures 2240,2242 defined within the vacuum discharge tube assembly section 2230 is effectively blocked. Conversely, when the apertures 2217 defined within a particular one of the sleeves 2215 are aligned with respect to the apertures 2240,2242 defined within a particular one of the vacuum discharge tube assembly sections 2230, air flow from the interior portion of the bulk material cargo container liner 2212 and through the apertures 2240,2242 defined within the vacuum discharge tube assembly section 2230 is effectively permitted.

Accordingly, again, different levels of vacuum or suction force are able to be generated and impressed upon different regions of the bulk cargo material disposed within the bulk material cargo container liner 2212 so as to facilitate and ensure the discharge and exhaust of the bulk cargo material from all longitudinal or axial regions of the bulk material cargo container liner 2212. It is also noted, in connection with this adjustment system, that the diametrical size of the apertures 2217,2240,2242, which are respectively defined within the sleeve member 2215 and the vacuum discharge tube assembly section 2230, may be varied so as to readily permit, for example, partial closure of the apertures 2217,2240,2242 and partial blockage of the air flow therethrough. In addition, the pitch or distance defined between successive ones of the apertures 2217,2240,2242 may likewise be varied. Such variations permit different vacuum or suction force levels to be attained within the vacuum discharge tube assembly sections 2230, and such variations may likewise also be incorporated within the strips or plates 2115 as disclosed in connection with the embodiment illustrated within **FIGURE 3****.**

It is lastly noted that, in connection with the different bulk cargo materials that are being transported within the bulk material cargo container liners, it is sometimes easier to discharge and exhaust particular types of bulk cargo materials than other types of bulk cargo materials. For example, in connection with the disposition of relatively coarse bulk cargo materials, such as, for example, pellets, tablets, or the like, within the bulk material cargo container liner, a substantially large volume of air is effectively present within the entire or overall bulk cargo material load in view of the fact that the air can permeate all of the spaces or interstices defined between individual ones of adjacent or abutting units, that is, the pellets, tablets, or the like, which comprise the bulk cargo material load. Accordingly, when such bulk cargo material is to be discharged and exhausted through means of the vacuum discharge tube assembly, the air present within the entire or overall bulk cargo material load is able to flow and effectively entrain the bulk cargo material therewith and therealong so as to in fact carry, discharge, and exhaust the bulk cargo material out from the bulk material cargo container liner. On the other hand, when the bulk cargo material comprises relatively fine material, such as, for example, powdery materials or the like, there is a relatively small volume of air present within the entire or overall bulk cargo material load in view of the fact that the minute particles, comprising such powdery type bulk cargo material, are in effect packed together so densely that substantially sized spaces or interstices, into which the air can readily permeate, simply do not exist. Therefore, when such bulk cargo materials are to be discharged and exhausted from the bulk material cargo container liner, the vacuum or suction forces cannot develop the necessary air flow within the bulk cargo material so as to entrain the bulk cargo material therealong. Accordingly, in order to rectify the aforenoted deficiency in connection with the discharge and exhaust of powdery type bulk cargo materials, a vertically oriented standpipe 2221, as shown in **FIGURE 4****,** is structurally and fluidically connected to the forwardmost end portion of the forwardmost vacuum discharge tube assembly section 2230. The upper end portion 2223 of the vertically oriented standpipe 2221 is adapted to be disposed above the upper level portion of the bulk cargo material disposed within the bulk material cargo container liner 2212, and in this manner, ambient air is always effectively present within the front end portion of the forwardmost vacuum discharge tube assembly section 2230 so as to effectively exert atmospheric pressure upon any bulk cargo material present within the entire vacuum discharge tube assembly 2230. Such atmospheric air fluidically cooperates with the vacuum or suction forces operating at the rearward end of the vacuum discharge tube assembly 2230, and accordingly, even powdery type bulk cargo material can be readily discharged and exhausted from the bulk material cargo container liner 2212.

Continuing further, and in connection with the actual fabrication of any one of the previously disclosed vacuum discharge tube assemblies, an additional embodiment, mode, or technique is envisioned in accordance with the principles and teachings of the present invention and is disclosed within **FIGURE 5****.** For example, as disclosed within **FIGURE 5****,** it is seen that each one of the vacuum discharge tube assembly sections 2330 has a coil spring member 2325 which is disposed internally thereof and which extends throughout the entire longitudinal or axial extent of each vacuum discharge tube assembly section 2330. In this manner, the coil spring members 2325 effectively help to prevent the internal collapse of any one of the vacuum discharge tube assembly sections 2330, not only when the vacuum discharge tube assembly sections 2330 are disposed internally within bulk material cargo container liners, and when the bulk material cargo container liners have bulk cargo material disposed therein, but in addition, the disposition or presence of the coil spring members 2325 internally within the vacuum discharge tube assembly sections 2330 effectively prevent the internal collapse of the same while the vacuum discharge tube assembly sections 2330 are being bent, flexed, coiled, or the like, during, for example, handling or storage of the same.

Having disclosed the aforenoted various structures comprising the inflatable air bag components, the vacuum discharge tube assemblies, and the overall bulk material cargo container liner systems with which the inflatable air bag components and the vacuum discharge tube assemblies are to be utilized, a brief description of the operation of the bulk material cargo container liner systems, having the inflatable air bag components and the vacuum discharge tube assemblies associated therewith, will now be described. It is to be appreciated, for example, that when a bulk material cargo load is initially loaded or charged into any one of the bulk material cargo container liners, the vacuum discharge tube assemblies will be disposed at their operational positions internally within the inflated bulk material cargo container liners, however, the inflatable air bag components will be disposed in their deflated states so as to in fact permit a full and complete bulk material cargo load to be charged or loaded into the bulk material cargo container liner. Subsequently, when the bulk material cargo load is to be discharged, unloaded, and exhausted from any one of the bulk material cargo container liners, each one of the vacuum discharge tube assemblies will be fluidically connected to the source of vacuum, not shown, the source of vacuum will be activated, and the bulk cargo material will flow naturally toward each one of the vacuum discharge tube assemblies. At a particular point in time, however, the natural flow of the bulk cargo material toward the vacuum discharge tube assemblies will cease in accordance with the aforenoted gravitational forces acting upon the bulk cargo material, that is, when the angle of repose of the bulk cargo material reaches a particular point or level. At this point in time, the inflatable air bag components can be progressively inflated so as to positively alter or enhance the angle of repose of the bulk cargo material whereby the same can once again flow toward the vacuum discharge tube assemblies so as to be exhausted from the bulk material cargo container liners.

Thus, it may be seen that in accordance with the various principles and teachings of the present invention, there has been disclosed a plurality of new and improved bulk material cargo container liner systems wherein each one of the systems comprises an inflatable bulk material cargo container liner which has at least one inflatable air bag component, and at least one vacuum discharge tube assembly, operatively associated therewith. When the inflatable air bag components are progressively inflated so as to assist the unloading, discharging, and exhausting of the bulk cargo material from the interior of the bulk material cargo container liner, after a portion of the bulk cargo material has been discharged, unloaded, and exhausted in accordance with natural gravitational forces whereby the surface of the bulk cargo material has already attained a particular angle of repose, the angle of repose of the surface of the bulk cargo material will effectively be positively readjusted such that the remaining portion of the bulk cargo material can be discharged, unloaded, and exhausted without necessitating any tilting of the bulk material cargo container and the bulk material cargo container liner disposed therein.

## Claims

1. A bulk material cargo container liner system for disposition within a bulk material cargo container (128), comprising:
a bulk material cargo container liner (12,112), for disposition within a bulk material cargo container (128), for containing bulk cargo material, and having a substantially rectangular parallelepiped structure when erected whereby said bulk material cargo container liner (12,112) comprises a front wall surface portion, a pair of side wall surface portions (16), a top wall surface portion, a bottom wall surface portion (20), a rear wall surface portion, and a longitudinal axial extent defined between said rear wall surface portion and said front wall surface portion;
at least one vacuum discharge tube member (130) disposed internally within said bulk material cargo container liner (12,112) for discharging the bulk cargo material, which is disposed within said bulk material cargo container liner, toward a bulk material discharge port defined within said rear wall surface portion of said bulk material cargo container liner; and,
at least one inflatable air bag component (10,110), operatively associated with said bulk material cargo container liner (12,112) for causing the bulk cargo material, disposed within said bulk material cargo liner (12,112), to undergo fluid flow toward said at least one vacuum discharge tube member (130) disposed within said bulk material cargo container liner (12,112) when said at least one inflatable air bag component (10,110) is inflated from a relatively deflated state to a relatively inflated state so as to facilitate the evacuation of the bulk cargo material from the interior of said bulk material cargo container liner (12,112) without requiring the tilting of said bulk material cargo container (128),
**characterised in that** said at least one vacuum discharge tube member (130) comprises a vacuum discharge tube assembly (130,2130) which comprises a plurality of vacuum discharge tube sections (2130-1,2130-2) connected together so as to extend throughout said longitudinal axial extent of said bulk material cargo container liner (12,112),
and further **characterised in that** said liner system comprises means (2115,2215:2142,2242:2117) operatively connected to said plurality of vacuum discharge tube sections (2130-1,2130-2) for adjusting the amount of vacuum suction force which can effectively be impressed upon each one of said vacuum discharge tube sections (2130-1,2130-2), whereby different levels of vacuum suction force can be generated throughout the longitudinal extent of the vacuum discharge tube assembly (130,2130).

2. The system as set forth in Claim 1, wherein a plurality of apertures (2142,2240,2242) is defined within peripheral side portions of the vacuum discharge tube sections (2130-1,2130-2), and wherein the means for adjusting the amount of vacuum suction force comprises:
a pair of apertured strips or plates (2115) movably mounted upon an interior portion of each one of the vacuum discharge tube sections (2130-1,2130-2) between extended and retracted positions, each apertured strip or plate (2115) being provided with a plurality of axially spaced apertures (2117), wherein movement of each pair of apertured strips or plates (2115) between the extended and retracted positions permits alignment and misalignment of said axially spaced apertures (2117) with the apertures defined within the peripheral side portions of each respective vacuum discharge tube section (2130-1,2130-2), whereby different levels of vacuum suction force can be generated throughout the longitudinal extent of the vacuum discharge tube assembly (130,2130).

3. The system as set forth in Claim 2, wherein:
the apertured strips or plates (2115) disposed within adjacent vacuum discharge tube sections (2130-1,2130-2) are interconnected.

4. The system as set forth in Claim 3, wherein:
the apertured strips or plates (2115) disposed within adjacent vacuum discharge tube sections (2130-1,2130-2) are interconnected by means of a slot and strap assembly (2119).

5. The system as set forth in Claims 2 to 4, wherein:
a diametrical size of the apertures (2240,2242,2117) which are defined, respectively, in the strips or plates (2115) and within the peripheral side portions of the vacuum discharge tube sections (2130-1,2130-2) is varied, thereby permitting partial closure of said apertures (2117,2240,2242) and partial flow of air therethrough.

6. The system as set forth in Claim 5, wherein:
a pitch or distance defined between successive ones of the apertures (2240,2242,2117) which are defined, respectively, in the strips or plates (2115) and within the peripheral side portions of the vacuum discharge tube sections (2130-1,2130-2) is varied.

7. The system as set forth in Claim 1, wherein a plurality of apertures (2142,2240,2242) is defined within peripheral side portions of the vacuum discharge tube sections (2130-1,2130-2), and wherein the means for adjusting the amount of vacuum suction force comprises:
an apertured sleeve member (2115) movably mounted within an interior portion of each one of the vacuum discharge tube sections (2130-1,2130-2) between extended and retracted positions, each apertured sleeve (2115) being provided with two sets of axially spaced apertures (2117), wherein movement of each apertured sleeve (2115) between the extended and retracted positions permits alignment and misalignment of said axially spaced apertures (2117) with the apertures defined within the peripheral side portions of each respective vacuum discharge tube section (2130-1,2130-2), whereby different levels of vacuum suction force can be generated throughout the longitudinal extent of the vacuum discharge tube assembly (130,2130).

8. The system as set forth in Claim 7, wherein:
a diametrical size of the apertures (2240,2242,2117) which are defined, respectively, in the sleeve member (2115) and within the peripheral side portions of the vacuum discharge tube sections (2130-1,2130-2) is varied, thereby permitting partial closure of said apertures (2117,2240,2242) and partial flow of air therethrough.

9. The system as set forth in Claim 8, wherein:
a pitch or distance defined between successive ones of the apertures (2240,2242, 2117) which are defined, respectively, in the sleeve member (2115) and within the peripheral side portions of the vacuum discharge tube sections (2130-1,2130-2) is varied.

10. The system as set forth in any preceding Claim, further comprising:
a vertically orientated standpipe (2221) which is structurally and fluidically connected to a forwardmost end portion of a forwardmost vacuum discharge tube section (2130).

11. The system as set forth in any preceding Claim, wherein:
said at least one vacuum discharge tube member (130,2330) has a circular cross-sectional configuration; and
a coil spring member (2325) is disposed internally within said at least one vacuum discharge tube member (2330) so as to prevent the internal collapse of said at least one vacuum discharge tube member (2330) when said at least one vacuum discharge tube member (2330) undergoes any one of flexed, bent, and coiled manipulations.

## Patentansprüche

1. Liner-System für einen Schüttgutfrachtbehälter zur Anordnung in einem Schüttgutfrachtbehälter (128), das Folgendes umfasst:
einen Liner (12, 112) für einen Schüttgutfrachtbehälter zur Anordnung in einem Schüttgutfrachtbehälter (128) zur Aufnahme von Schüttgutfracht und mit einer im Wesentlichen rechteckigen parallelepipedischen Struktur, wenn er aufgerichtet ist, wodurch der Liner (12, 112) für einen Schüttgutfrachtbehälter einen Vorderwandflächenteil, ein Paar Seitenwandflächenteile (16), einen Deckenwandflächenteil, einen Bodenwandflächenteil (20), einen Rückwandflächenteil und eine zwischen dem Rückwandflächenteil und dem Vorderwandflächenteil definierte axiale Längserstreckung aufweist;
mindestens ein Vakuum-Entladungsrohrglied (130), das innen in dem Liner (12, 112) für einen Schüttgutfrachtbehälter zum Entladen von in dem Liner für einen Schüttgutfrachtbehälter angeordneter Schüttgutfracht zu einem in dem Rückwandflächenteil des Liners für einen Schüttgutfrachtbehälter definierten Schüttgutentladedurchtritt angeordnet ist; und
mindestens eine aufblasbare Luftsackkomponente (10, 110), die dem Liner (12, 112) für einen Schüttgutfrachtbehälter wirkzugeordnet ist, um zu bewirken, dass die in dem Liner (12, 112) für Schüttgutfracht angeordnete Schüttgutfracht eine Fluidströmung zu dem mindestens einen in dem Liner (12, 112) für einen Schüttgutfrachtbehälter angeordneten Vakuum-Entladungsrohrglied (130) erfährt, wenn die mindestens eine aufblasbare Luftsackkomponente (10, 110) aus einem im Verhältnis luftleeren Zustand in einen im Verhältnis aufgeblasenen Zustand aufgeblasen wird, um die Entleerung der Schüttgutfracht aus dem Inneren des Liners (12, 112) für einen Schüttgutfrachtbehälter zu erleichtern, ohne dass der Schüttgutfrachtbehälter (128) gekippt werden muss,
**dadurch gekennzeichnet, dass** das mindestens eine Vakuum-Entladungsrohrglied (130) eine Vakuum-Entladungsrohranordnung (130, 2130) aufweist, die mehrere Vakuum-Entladungsrohrabschnitte (2130-1, 2130-2) umfasst, die so miteinander verbunden sind, dass sie sich durch die ganze axiale Längserstreckung des Liners (12, 112) für einen Schüttgutfrachtbehälter erstrecken,
und weiterhin **dadurch gekennzeichnet, dass** das Liner-System ein Mittel (2115, 2215; 2142, 2242; 2117) umfasst, das mit den mehreren Vakuum-Entladungsrohrabschnitten (2130-1, 2130-2) zur Einstellung des Ausmaßes an Vakuumsaugkraft, mit der jeder der Vakuum-Entladungsrohrabschnitte (2130-1, 2130-2) effektiv beaufschlagt werden kann, wirkverbunden ist, wodurch verschiedene Vakuumsaugkrafthöhen über die ganze Längserstreckung der Vakuum-Entladungsrohranordnung (130, 2130) erzeugt werden können.

2. System nach Anspruch 1, wobei mehrere Öffnungen (2142, 2240, 2242) in Umfangsseitenteilen der Vakuum-Entladungsrohrabschnitte (2130-1, 2130-2) definiert sind und wobei das Mittel zur Einstellung des Ausmaßes an Vakuumsaugkraft Folgendes umfasst:
ein Paar mit Öffnungen versehene Streifen oder Platten (2115), die am Innenteil jedes der Vakuum-Entladungsrohrabschnitte (2130-1, 2130-2) zwischen einer ausgezogenen und einer eingezogenen Position beweglich angebracht sind, wobei jede(r) mit Öffnungen versehene Streifen oder Platte (2115) mit mehreren axial beabstandeten Öffnungen (2117) versehen ist, wobei eine Bewegung jedes Paars mit Öffnungen versehener Streifen oder Platten (2115) zwischen der ausgezogenen und der eingezogenen Position eine Ausrichtung oder Nichtausrichtung der axial beabstandeten Öffnungen (2117) auf die in den Umfangsseitenteilen jedes Vakuum-Entladungsrohrabschnitts (2130-1, 2130-2) definierten Öffnungen gestattet, wodurch verschiedene Vakuumsaugkrafthöhen über die ganze Längserstreckung der Vakuum-Entladungsrohranordnung (130, 2130) erzeugt werden können.

3. System nach Anspruch 2, wobei:
die mit Öffnungen versehenen Streifen oder Platten (2115), die in benachbarten Vakuum-Entladungsrohrabschnitten (2130-1, 2130-2) angeordnet sind, miteinander verbunden sind.

4. System nach Anspruch 3, wobei:
die mit Öffnungen versehenen Streifen oder Platten (2115), die in benachbarten Vakuum-Entladungsrohrabschnitten (2130-1, 2130-2) angeordnet sind, mittels einer Schlitz- und Bandanordnung (2119) miteinander verbunden sind.

5. System nach den Ansprüchen 2 bis 4, wobei:
eine diametrale Größe der Öffnungen (2240, 2242, 2117), die jeweils in den Streifen oder Platten (2115) und in den Umfangsseitenteilen der Vakuum-Entladungsrohrabschnitte (2130-1, 2130-2) definiert werden, variiert ist, wodurch ein teilweises Schließen der Öffnungen (2117, 2240, 2242) und eine teilweise Luftströmung dort hindurch gestattet wird.

6. System nach Anspruch 5, wobei:
eine bzw. ein zwischen aufeinanderfolgenden der Öffnungen (2240, 2242, 2117), die jeweils in den Streifen oder Platten (2115) und in den Umfangsseitenteilen der Vakuum-Entladungsrohrabschnitte (2130-1, 2130-2) definiert werden, definierte(r) Teilung oder Abstand variiert ist.

7. System nach Anspruch 1, wobei mehrere Öffnungen (2142, 2240, 2242) in Umfangsseitenteilen der Vakuum-Entladungsrohrabschnitte (2130-1, 2130-2) definiert sind und wobei das Mittel zur Einstellung des Ausmaßes an Vakuumsaugkraft Folgendes umfasst:
ein mit Öffnungen versehenes Hülsenglied (2115), das in einem Innenteil jedes der Vakuum-Entladungsrohrabschnitte (2130-1, 2130-2) zwischen einer ausgezogenen und einer eingezogenen Position beweglich angebracht ist, wobei jede mit Öffnungen versehene Hülse (2115) mit zwei Sätzen von axial beabstandeten Öffnungen (2117) versehen ist, wobei eine Bewegung jeder mit Öffnungen versehenen Hülse (2115) zwischen der ausgezogenen und der eingezogenen Position eine Ausrichtung oder Nichtausrichtung der axial beabstandeten Öffnungen (2117) auf die in den Umfangsseitenteilen jedes Vakuum-Entladungsrohrabschnitts (2130-1, 2130-2) definierten Öffnungen gestattet, wodurch verschiedene Vakuumsaugkrafthöhen über die ganze Längserstreckung der Vakuum-Entladungsrohranordnung (130, 2130) erzeugt werden können.

8. System nach Anspruch 7, wobei:
eine diametrale Größe der Öffnungen (2240, 2242, 2117), die jeweils in dem Hülsenglied (2115) und in den Umfangsseitenteilen der Vakuum-Entladungsrohrabschnitte (2130-1, 2130-2) definiert werden, variiert ist, wodurch ein teilweises Schließen der Öffnungen (2117, 2240, 2242) und eine teilweise Luftströmung dort hindurch gestattet wird.

9. System nach Anspruch 8, wobei:
eine bzw. ein zwischen aufeinanderfolgenden der Öffnungen (2240, 2242, 2117), die jeweils in dem Hülsenglied (2115) und in den Umfangsseitenteilen der Vakuum-Entladungsrohrabschnitte (2130-1, 2130-2) definiert werden, definierte(r) Teilung oder Abstand variiert ist.

10. System nach einem vorhergehenden Anspruch, das weiterhin Folgendes umfasst:
ein vertikal ausgerichtetes Standrohr (2221), das strukturell und strömungsmäßig mit einem vordersten Endteil eines vordersten Vakuum-Entladungsrohrabschnitts (2130) verbunden ist.

11. System nach einem vorhergehenden Anspruch, wobei:
das mindestens eine Vakuum-Entladungsrohrglied (130, 2330) eine kreisförmige Querschnittskonfiguration aufweist; und
ein Schraubenfederglied (2325) innen in dem mindestens einen Vakuum-Entladungsrohrglied (2330) angeordnet ist, um das innere Zusammenfallen des mindestens einen Vakuum-Entladungsrohrglieds (2330) zu verhindern, wenn das mindestens eine Vakuum-Entladungsrohrglied (2330) Knick-, Biege- und Windungsvorgänge erfährt.

## Revendications

1. Système de poche intérieure pour conteneur de transport de matières en vrac à disposer à l'intérieur d'un conteneur (128) de transport de matières en vrac, comprenant:
une poche intérieure (12, 112) pour conteneur de transport de matières en vrac à disposer à l'intérieur d'un conteneur (128) de transport de matières en vrac, destinée à contenir des matières en vrac et comportant une structure parallélépipédique sensiblement rectangulaire quand elle est installée, moyennant quoi ladite poche intérieure (12, 112) pour conteneur de transport de matières en vrac comprend une partie de surface de paroi avant, une paire de parties de surface de paroi latérale (16), une partie de surface de paroi supérieure, une partie de surface de paroi inférieure (20), une partie de surface de paroi arrière et une étendue axiale longitudinale délimitée entre ladite partie de surface de paroi arrière et ladite partie de surface de paroi avant ;
au moins un élément de goulotte d'évacuation par aspiration (130) disposé à l'intérieur de ladite poche intérieure (12, 112) pour conteneur de transport de matières en vrac pour évacuer la matière en vrac qui est disposée à l'intérieur de ladite poche intérieure pour conteneur de transport de matières en vrac vers un orifice d'évacuation de la matière en vrac défini au sein de ladite partie de surface de paroi arrière de ladite poche intérieure pour conteneur de transport de matières en vrac ; et
au moins un composant de sac gonflable (10, 110), associé dans son fonctionnement avec ladite poche intérieure (12, 112) pour conteneur de transport de matières en vrac pour amener la matière en vrac disposée à l'intérieur de ladite poche intérieure (12, 112) pour conteneur de transport de matières en vrac à s'écouler fluidement vers ledit au moins un élément de goulotte d'évacuation par aspiration (130) disposé à l'intérieur de ladite poche intérieure (12, 112) pour conteneur de transport de matières en vrac quand on gonfle ledit au moins un composant de sac gonflable (10, 110) depuis un état relativement dégonflé jusqu'à un état relativement gonflé afin de faciliter l'évacuation de la matière en vrac de l'intérieur de ladite poche intérieure (12, 112) pour conteneur de transport de matières en vrac sans qu'il soit nécessaire de basculer ledit conteneur (128) de transport de matières en vrac,
**caractérisé en ce que** ledit au moins un élément de goulotte d'évacuation par aspiration (130) comprend un ensemble goulotte d'évacuation par aspiration (130, 2130) qui comprend une pluralité de sections de goulotte d'évacuation par aspiration (2130-1, 2130-2) reliées ensemble afin de s'étendre sur toute ladite étendue axiale longitudinale de ladite poche intérieure (12, 112) pour conteneur de transport de matières en vrac,
et **caractérisé en outre en ce que** ledit système de poche intérieure comprend des moyens (2115, 2215 : 2142, 2242 : 2117) reliés dans leur fonctionnement à ladite pluralité de sections de goulotte d'évacuation par aspiration (2130-1, 2130-2) pour régler la valeur de la force d'aspiration qu'on peut appliquer effectivement à chacune desdites sections de goulotte d'évacuation par aspiration (2130-1, 2130-2), moyennant quoi on peut générer différents niveaux de force d'aspiration sur toute l'étendue longitudinale de l'ensemble goulotte d'évacuation par aspiration (130, 2130).

2. Système selon la revendication 1, dans lequel une pluralité d'ouvertures (2142, 2240, 2242) sont délimitées dans des parties latérales périphériques des sections de goulotte d'évacuation par aspiration (2130-1, 2130-2) et dans lequel les moyens de réglage de la valeur de la force d'aspiration comprennent une paire de bandes ou plaques (2115) pourvues d'ouvertures, montées sur une partie intérieure de chacune des sections de goulotte d'évacuation par aspiration (2130-1, 2130-2) de façon à pouvoir bouger entre des positions sorties et rentrées, chaque bande ou plaque (2115) pourvue d'ouvertures étant dotée d'une pluralité d'ouvertures (2117) espacées axialement, le mouvement de chaque paire de bandes ou plaques (2115) pourvues d'ouvertures entre les positions sorties et rentrées permettant d'aligner ou de décaler lesdites ouvertures (2117) espacées axialement par rapport aux ouvertures délimitées dans les parties latérales périphériques de chaque section de goulotte d'évacuation par aspiration (2130-1, 2130-2) correspondante, moyennant quoi on peut générer différents niveaux de force d'aspiration sur toute l'étendue longitudinale de l'ensemble goulotte d'évacuation par aspiration (130, 2130).

3. Système selon la revendication 2, dans lequel les bandes ou plaques (2115) pourvues d'ouvertures qui sont disposées dans des sections de goulotte d'évacuation par aspiration (2130-1, 2130-2) adjacentes sont reliées entre elles.

4. Système selon la revendication 3, dans lequel les bandes ou plaques (2115) pourvues d'ouvertures qui sont disposées dans des sections de goulotte d'évacuation par aspiration (2130-1, 2130-2) adjacentes sont reliées entre elles au moyen d'un ensemble coulisse-bride plate (2119).

5. Système selon les revendications 2 à 4, dans lequel on fait varier la dimension du diamètre des ouvertures (2240, 2242, 2117) qui sont délimitées respectivement dans les parties latérales périphériques des sections de goulotte d'évacuation par aspiration (2130-1, 2130-2) et dans les bandes ou plaques (2115), permettant de ce fait une fermeture partielle desdites ouvertures (2240, 2242, 2117) et un écoulement partiel d'air à travers elles.

6. Système selon la revendication 5, dans lequel on fait varier le pas ou la distance défini(e) entre deux ouvertures successives parmi les ouvertures (2240, 2242, 2117) qui sont délimitées respectivement dans les parties latérales périphériques des sections de goulotte d'évacuation par aspiration (2130-1, 2130-2) et dans les bandes ou plaques (2115).

7. Système selon la revendication 1, dans lequel une pluralité d'ouvertures (2142, 2240, 2242) sont délimitées dans des parties latérales périphériques des sections de goulotte d'évacuation par aspiration (2130-1, 2130-2) et dans lequel les moyens de réglage de la valeur de la force d'aspiration comprennent un élément de manchon (2115) pourvu d'ouvertures, monté dans une partie intérieure de chacune des sections de goulotte d'évacuation par aspiration (2130-1, 2130-2) de façon à pouvoir bouger entre des positions sorties et rentrées, chaque manchon (2115) pourvu d'ouvertures étant doté de deux jeux d'ouvertures (2117) espacées axialement, le mouvement de chaque manchon (2115) pourvu d'ouvertures entre les positions sorties et rentrées permettant d'aligner ou de décaler lesdites ouvertures (2117) espacées axialement par rapport aux ouvertures délimitées dans les parties latérales périphériques de chaque section de goulotte d'évacuation par aspiration (2130-1, 2130-2) correspondante, moyennant quoi on peut générer différents niveaux de force d'aspiration sur toute l'étendue longitudinale de l'ensemble goulotte d'évacuation par aspiration (130, 2130).

8. Système selon la revendication 7, dans lequel on fait varier la dimension du diamètre des ouvertures (2240, 2242, 2117) qui sont délimitées respectivement dans les parties latérales périphériques des sections de goulotte d'évacuation par aspiration (2130-1, 2130-2) et dans l'élément de manchon (2115), permettant de ce fait une fermeture partielle desdites ouvertures (2240, 2242, 2117) et un écoulement partiel d'air à travers elles.

9. Système selon la revendication 8, dans lequel on fait varier le pas ou la distance défini(e) entre deux ouvertures successives parmi les ouvertures (2240, 2242, 2117) qui sont délimitées respectivement dans les parties latérales périphériques des sections de goulotte d'évacuation par aspiration (2130-1, 2130-2) et dans l'élément de manchon (2115).

10. Système selon l'une quelconque des revendications précédentes, comprenant en outre une colonne montante (2221) orientée verticalement et qui comporte une liaison structurelle et fluidique avec la partie terminale la plus en avant de la section de goulotte d'évacuation par aspiration (2130) la plus en avant.

11. Système selon l'une quelconque des revendications précédentes, dans lequel :
ledit au moins un élément de goulotte d'évacuation par aspiration (130, 2330) présente une configuration en coupe transversale circulaire ; et
un élément de ressort hélicoïdal (2325) est disposé à l'intérieur dudit au moins un élément de goulotte d'évacuation par aspiration (2330) afin d'empêcher l'affaissement interne dudit au moins un élément de goulotte d'évacuation par aspiration (2330) quand ledit au moins un élément de goulotte d'évacuation par aspiration (2330) subit une manipulation quelconque du genre flexion, courbure ou enroulement.
